# EUROPÄISCHE PATENTANMELDUNG

(11) **EP 1 388 729 A2**
(43) Veröffentlichungstag der Anmeldung: **11.02.2004**
(21) Anmeldenummer: 03015996.6
(22) Anmeldetag: 14.07.2003
(51) Int. Cl.: G01D 5/14

(54) **Wegsensor**

(30) Priorität: 31.07.2002 DE 10234965
(71) Anmelder: Beru AG, 71636 Ludwigsburg (DE)
(72) Erfinder: Arno, Marto, 71636 Ludwigsburg (DE); Berdel, Erich, 71636 Ludwigsburg (DE); Wagner, Klaus, 71636 Ludwigsburg (DE)
(74) Vertreter: Pohlmann, Eckart, Dipl.-Phys.

(57) **Zusammenfassung**

Wegsensor zum Messen der Wegstrecke eines sich bewegenden Elementes. Zwei Polbleche (3) aus einem magnetischen Material sind in zwei beabstandeten Ebenen angeordnet und verlaufen in Wegmessrichtung. Ein Magnetflusssensor (2) ist im Spalt zwischen den Polblechen (3) angeordnet und ein Permanentmagnet (1), der mit dem sich bewegenden Element verbunden wird, ist in Wegmessrichtung beweglich mit seiner Magnetisierungsrichtung senkrecht zu den Polblechen (3) zwischen diesen angeordnet. Die Polbleche (3) haben eine Breite, die sich in Wegmessrichtung ändert, und der Permanentmagnet (1) steht in Querrichtung zur Wegmessrichtung über die Polbleche (3) über.

## Beschreibung

Die Erfindung betrifft einen Wegsensor zum Messen der Wegstrecke eines sich bewegenden Elementes mit wenigstens zwei Polblechen aus einem magnetischen Material, die in zwei beabstandeten Ebenen angeordnet sind und in Wegmessrichtung verlaufen, einem im Spalt zwischen den Polblechen angeordneten Magnetflusssensor und einem Permanentmagneten, der mit dem sich bewegenden Element verbunden wird und in Wegmessrichtung beweglich mit seiner Magnetisierungsrichtung senkrecht zu den Polblechebenen zwischen den Polblechen angeordnet ist.

Ein derartiger Wegsensor ist aus der DE 197 38 316 A1 bekannt. Bei dem bekannten Wegsensor ist der Permanentmagnet in einer Ebene parallel zu den Polblechebenen in zwei Teile aufgeteilt, wobei beide Teile entgegengesetzt zueinander magnetisiert sind, und verlaufen die Polbleche unter einem Winkel schräg zur Wegmessrichtung. Bei diesem Wegsensor ist für den Magnetfluss am Magnetflusssensor je nach Position des Permanentmagneten in Wegmessrichtung einer der beiden entgegengesetzt magnetisierten Teile maßgeblich, so dass der Magnetflusssensor in den beiden Endstellungen des Permanentmagneten ein maximales positives bzw. maximales negatives Signal ausgibt.

Es sind weiterhin permanentmagnetische lineare kontaktlose Wegsensoren oder sog. PLCD-Wegsensoren bekannt, die im wesentlichen aus einem weichmagnetischen Kern bestehen, der auf seiner gesamten Länge von einer Sekundärspule und an den Enden von kurzen Primärspulen umwickelt ist.

Ein an diesen Sensor angenäherter Permanentmagnet führt zu einer lokalen magnetischen Sättigung des Kerns, wobei die Position dieses gesättigten Bereiches entlang der Sensorachse, d. h. der Wegmessrichtung durch das Spulensystem ermittelt werden kann.

Bei den bekannten Wegsensoren ist die Position des Permanentmagneten im Wegsensor, d. h. im Messsystem genau definiert und eng toleriert, da Veränderungen in der Lage des Permanentmagneten in anderen Richtungen als der Wegmessrichtung das Ausgangssignal des Magnetflusssensors beeinflussen oder den Wegsensor sogar außer Funktion setzen können.

Bei dem aus der DE 197 38 316 A1 bekannten Wegsensor ist der Permanentmagnet daher in Wegmessrichtung über Führungselemente geführt. Deren mechanische Ankopplung an den Wegsensor ist allerdings nicht verschleißfrei.

Die der Erfindung zu Grunde liegende Aufgabe besteht daher darin, einen Wegsensor der eingangs genannten Art zu schaffen, dessen Ausgangssignal von Bewegungen in anderen Richtungen als der Wegmessrichtung unabhängig ist.

Diese Aufgabe wird gemäß der Erfindung dadurch gelöst, dass die Polbleche eine Breite in den Polblechebenen haben, die sich in Wegmessrichtung ändert.

Besonders bevorzugte Ausgestaltungen und Weiterbildungen des erfindungsgemäßen Wegsensors sind Gegenstand der Patentansprüche 2 bis 7.

Bei dem erfindungsgemäßen Wegsensor ist das Sensorsignal zur Magnetflussdichte am Magnetflusssensor proportional. Die Unempfindlichkeit dieses Signals gegenüber einer Permanentmagnetbewegung in anderen Richtungen als der Messrichtung ergibt sich auf Grund der symmetrischen Anordnung und Ausbildung der Polbleche. Das heißt insbesondere, dass die Unempfindlichkeit dieses Signals gegenüber einer Permanentbewegung in der Richtung senkrecht zu den Polblechen auf der gleichbleibenden Gesamtgröße der Luftspalte zwischen dem Permanentmagneten und den Polblechen beruht, während die Unempfindlichkeit dieses Signals gegenüber einer Permanentmagnetbewegung in Querrichtung auf dem seitlichen Überstand des Permanentmagneten über die Polbleche beruht.

Im Folgenden wird anhand der zugehörigen Zeichnung ein besonders bevorzugtes Ausführungsbeispiel der Erfindung näher beschrieben. Es zeigen
Fig. 1 eine Schnittansicht des Ausführungsbeispiels und
Fig. 2 eine perspektivische Ansicht des Ausführungsbeispiels.

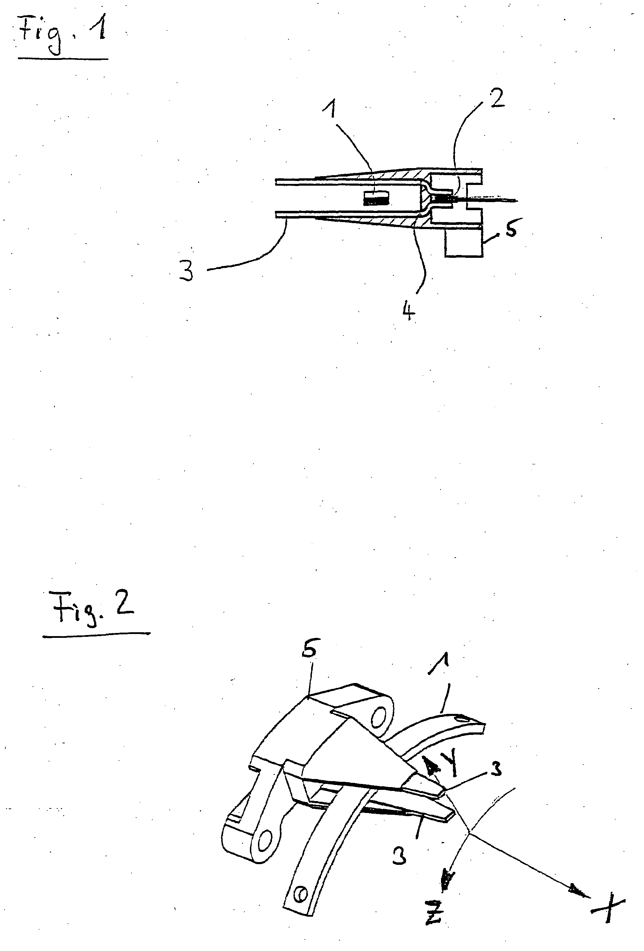

Das in den Figuren dargestellte Ausführungsbeispiel des erfindungsgemäßen Wegsensors umfasst wenigstens zwei Polbleche 3 aus einem magnetischen Material, die einen Magnetkreis bilden. Die beiden Polbleche 3 sind in zwei beabstandeten Ebenen angeordnet und erstrecken sich in Wegmessrichtung X (Fig. 2). Im Luftspalt 4 zwischen den Polblechen, in dem sich der magnetische Fluss konzentriert, ist ein Magnetflusssensor 2, beispielsweise ein Hall IC angeordnet, der die Magnetflussdichte erfasst.

Ein Permanentmagnet 1, der zur Messung der Wegstrecke eines sich in X-Richtung bewegenden Elementes mit dem sich bewegenden Element verbunden wird, ist in Wegmessrichtung X beweglich mit seiner Magnetisierungsrichtung senkrecht zu den Polblechebenen zwischen den Polblechen 3 angeordnet.

Die Polbleche 3 und der Magnetflusssensor 2 sind in einem Halter 5 angeordnet.

Wie es insbesondere in Fig. 2 dargestellt ist, haben die Polbleche 3 in den Polblechebenen eine Breite, die sich in Wegmessrichtung X ändert, nämlich von der Seite des Magnetflusssensors 2 ausgehend abnimmt. Es ist aber auch möglich, dass die Breite der Polbleche von einer Stelle in der Mitte in Wegmessrichtung zu beiden Enden hin abnimmt. Die Polbleche sind insbesondere im Bereich des Magnetflusssensors 2 abgekröpft, wobei die Breite der Polbleche 3 am sensorseitigen Ende der Größe des Magnetflusssensors 2 angepasst ist. Es ist aber auch möglich, dass ein bestimmter Bereich der Polbleche 3 eine konstante Breite ohne Breitenänderung aufweist, was dann der Fall sein kann, wenn bei einer Anwendung, die einen bestimmten Bewegungsbereich zulässt, ein Signal erzeugt werden soll, wenn dieser Bereich dann überschritten wird. Der Permanentmagnet 1 hat in Querrichtung, d. h. in der zu den Polblechebenen parallelen Ebene einen seitlichen Überstand über die Polbleche 3, wie es gleichfalls aus Fig. 2 erkenntlich ist.

Die Polbleche 3 bilden zusammen mit dem berührungslos, d. h. ohne mechanischen Kontakt mit dem Wegsensor bewegten Permanentmagneten 1 einen Magnetkreis mit dem Luftspalt 4. Wenn sich der Permanentmagnet 1 in X-Richtung bewegt, ändert sich der Magnetkreis und damit die Magnetflussdichte im Luftspalt 4, die vom Magnetflusssensor 2 erfasst wird. Das Ausgangssignal des Magnetflusssensors 2 ändert sich proportional hierzu.

Die beschriebene geometrische Form der Polbleche 3 bewirkt dabei eine Änderung der Magnetmasse (Magnetenergie) im Magnetkreis, wenn sich der Permanentmagnet 1 in die X-Richtung bewegt. Der magnetische Fluss wird auf den Sensor 2 geleitet, wobei sich in dem Luftspalt, in dem sich der Sensor 2 befindet, die Flussdichte ändert. Das Ausgangssignal des Sensors 2 ist zur Flussdichte proportional.

Bewegungen des Permanentmagneten 1 in die Y- und Z-Richtung verursachen keine Anderungen im Ausgangssignal des Sensors 2. Das beruht bezüglich einer Permanentmagnetbewegung in Y-Richtung auf der gleichbleibenden Gesamtgröße der Luftspalte zwischen dem Permanentmagneten 1 und den Polblechen 3. Auf Grund des seitlichen Überstandes des Permanentmageneten 1 über die Polbleche 3 in Z-Richtung ist das Ausgangssignal des Magnetflusssensors 2 auch unempfindlich gegenüber einer Permanentmagnetbewegung in Z-Richtung.

Wie es insbesondere in Fig. 2 dargestellt ist, kann ein ringsektorförmigen Permanentmagneten 1 vorgesehen sein, der auf einer Druckachse angeordnet wird.

Der oben beschriebene Wegsensor hat den Vorteil, dass die Erfassung der Bewegung des sich bewegenden Permanentmagneten berührungslos und nur in einer der drei möglichen Achsen erfolgt, so dass sich eine mechanische Führung des Sensors erübrigt. Daraus ergibt sich eine hohe Fehlertoleranz der Messanordnung bezüglich der Position des Permanentmagneten und insbesondere eine geringe Querempfindlichkeit auf Bewegungen des Permanentmagneten, die nicht in Wegmessrichtung gehen. Auf Grund der Ausbildung des Magnetflusssensors als integrierter Hall-Sensor ist der Wegsensor kostengünstig.

Ein weiterer Vorteil besteht darin, dass über die Geometrie der Polblechflächen eine freie Definition des Sensorausgangssignals möglich ist.

## Patentansprüche

1. Wegsensor zum Messen der Wegstrecke eines sich bewegenden Elementes mit
- wenigstens zwei Polblechen (3) aus einem magnetischen Material, die in zwei beabstandeten Ebenen angeordnet sind und in Wegmessrichtung verlaufen,
- einem im Spalt (4) zwischen den Polblechen (3) angeordneten Magnetflusssensor (2) und
- einem Permanentmagneten (1), der mit dem sich bewegenden Element verbunden wird und in Wegmessrichtung beweglich mit seiner Magnetisierungsrichtung senkrecht zu den Polblechebenen zwischen den Polblechen (3) angeordnet ist,
**dadurch gekennzeichnet, dass**
- die Polbleche (3) eine Breite in den Polblechebenen haben, die sich wenigstens über einen Teil der Polbleche (3) in Wegmessrichtung ändert.

2. Wegsensor nach Anspruch 1, **dadurch gekennzeichnet, dass** die Polbleche bezüglich des Permanentmagneten (1) symmetrisch sind.

3. Wegsensor nach Anspruch 1 oder 2, **dadurch gekennzeichnet, dass** der Permanentmagnet (1) in der zu den Polblechebenen parallelen Ebene seitlich über die Polbleche (3) übersteht.

4. Wegsensor nach einem der Ansprüche 1 bis 3, **dadurch gekennzeichnet, dass** der Permanentmagnet (1) die Form eines Ringsektors hat.

5. Wegsensor nach einem der vorhergehenden Ansprüche, **dadurch gekennzeichnet, dass** die Breite der Polbleche (3) von der Stelle, an der der Magnetflusssensor (2) angeordnet ist, ausgehend abnimmt.

6. Wegsensor nach einem der Ansprüche 1 bis 4, **dadurch gekennzeichnet, dass** die Breite der Polbleche von einer Stelle in Wegmessrichtung in der Mitte zu beiden Enden hin abnimmt.

7. Wegsensor nach einem der vorhergehenden Ansprüche, **dadurch gekennzeichnet, dass** der Magnetflusssensor (2) ein IC Hall-Element ist.
